Europäisches Patentamt

European Patent Office

Office européen des brevets

(11) Veröffentlichungsnummer: **0 181 320**
A2

(12) **EUROPÄISCHE PATENTANMELDUNG**

(21) Anmeldenummer: 85890275.2

(22) Anmeldetag: 07.11.85

(51) Int. Cl.⁴: **G 06 F 3/00**

(30) Priorität: 08.11.84 AT 3544/84

(43) Veröffentlichungstag der Anmeldung:
14.05.86 Patentblatt 86/20

(84) Benannte Vertragsstaaten:
AT DE FR GB IT NL SE

(71) Anmelder: MUPID COMPUTER GESELLSCHAFT m.b.H.
Münzgrabenstrasse 11
A-8010 Graz(AT)

(72) Erfinder: Bogensberger, Heidrun, Dipl.-Ing.
Theodor-Körner-Strasse 180/5
A-8010 Graz(AT)

(54) **Anordnung zur Speicherung einer Bildvorlage in einem Digitalspeicher.**

(57) Das analoge Bildsignal einer Videokamera (1) wird an den Eingang eines Vergleichers (2) geleitet und mit Hilfe eines von einem Referenzpegelgenerator (3) erzeugten Bezugssignals digitalisiert. Das digitale Bildsignal wird von einer Speicherzugriffslogik (5) in einen Digitalspeicher übertragen. Die Taktung und Synchronisation der Übertragung mit der Aufnahme des Bildes erfolgt durch eine Aktivierungslogik (4). Ein Mikrocomputer (6) nimmt die Einstellung der Taktfrequenz, des Farbkanals und des Bezugssignals vor. Mit geringem technischen Aufwand wird eine platzsparende Speicherung der Bildvorlage erreicht.

0181320

MUPID COMPUTER GESELLSCHAFT m.b.H.    Unser Zeichen
Graz                                  VPA 84 P 7019 E

Anordnung zur Speicherung einer Bildvorlage in einem Digitalspeicher

Die Erfindung betrifft eine Anordnung zur Umsetzung
eines, durch fotoelektrische Aufnahme erhaltenen, analogen Bildsignals in ein digitales Bildsignal mittels eines
Vergleichers, von dessen Ausgang das digitale Bildsignal
als Vergleichsergebnis in Form eines Bits abnehmbar ist,
wobei den Eingängen des Vergleichers neben dem analogen
Bildsignal ein von einem Referenzpegelgenerator erzeugtes
Bezugssignal zugeführt ist und der Referenzpegelgenerator
einen Digital/Analog-Wandler beinhaltet, dessen Eingang
zur Bezugssignaleinstellung mit einem Mikrocomputer verbunden ist.

Aus der DE 31 35 156 A1 ist eine derartige Anordnung als
Bildsignalverarbeitungsgerät bekannt, das zum Gebrauch in
einem Faksimilesystem geeignet ist. Über eine Digitaldateneingabeeinheit, vorzugsweise einen Mikrocomputer, wird
ein Referenzpegel eingestellt und einem Digital/Analog-
Wandler zugeführt. Das so gebildete Analogsignal wird gemeinsam mit einem durch fotoelektrisches Lesen eines Originals erhaltenen analogen Bildsignal zu einem Vergleicher geleitet, der ein binäres Bildsignal zur weiteren
Verarbeitung erzeugt. Ein derartiges Bildsignalverarbeitungsgerät stellt somit eine einfache Möglichkeit dar,
Bildvorlagen zu digitalisieren.

Die Möglichkeit der Betrachtung und Modifikation der digitalisierten Vorlage, sowie deren Abspeicherung in einem
Digitalspeicher ist aus der DE 23 22 939 B2 bekannt, wo-

Lac 1 Obh / 28.10.1985

bei hier elektrische Videosignale einer Fernsehkamera über einen Zwischenspeicher einer Prozeßrechenanlage zugeführt werden. In einem Amplitudensieb werden Horizontal- und Vertikalimpulse von der Bildinformation getrennt. Die Bildinformation wird einem Analog/Digital-Wandler zugeführt, der den Helligkeitswert als Dualzahl liefert. Diese wird gemeinsam mit den Koordinaten des Bildpunktes abgespeichert und somit wird der Rechner in die Lage versetzt, ein Bild nach dessen vollständigen Aufnahme auszuwerten. Das digitalisierte Fernsehsignal kann nach Bedarf mit anderen digitalen Werten vermischt oder verglichen werden. Selbstverständlich besteht auch die Möglichkeit der Ausgabe des Bildes an einem Sichtgerät. Diese Anordnung stellt eine direkte Umsetzung von Signalen einer Fernsehkamera in rechnerlesbare Daten dar, und von dem Zwischenspeicher werden die Bild- und Lageinformationen, beispielsweise zeilenweise, in den Arbeitsspeicher des Rechners übertragen. Eine Bearbeitung oder Beeinflussung des Bildinhaltes ist jedoch erst nachträglich durch den Prozeßrechner möglich. Als Folge der Auflösung in zahlreiche Grau- bzw. Farbwerte und der zusätzlichen Abspeicherung der Lageinformation ist der Speicherplatzbedarf sehr hoch, was insbesondere eine Abspeicherung mehrerer Bilder aufwendig und unwirtschaftlich macht.

Der Erfindung liegt die Aufgabe zugrunde, Bildvorlagen mit möglichst geringem technischen Aufwand umzusetzen und digital zu speichern, wobei der benötigte Speicherplatz möglichst gering zu halten ist.

Die Aufgabe wird gemäß Patentanspruch 1 dadurch gelöst, daß mindestens ein Signalausgang einer zu Aufnahme eingesetzten Videokamera mit dem entsprechenden Eingang des Vergleichers und eine Speicherzugriffslogik sowohl mit dem Ausgang des Vergleichers als auch mit dem Mikrocomputer verbunden ist, daß eine Aktivierungslogik vorgesehen ist, die zur getakteten, von Synchronimpulsen der Videokamera gesteuerten Übertragung des digitalen Bildsignals in einen Digitalspeicher sowohl mit dem Mikrocomputer als auch mit der Speicherzugriffslogik verbunden ist und daß die Speicherzugriffslogik von der Aktivierungslogik ansteuerbar ist.

Durch eine derartige Anordnung ist es möglich, die Digitalisierung der Bildvorlage in beliebigen Schritten, beispielsweise linear oder nichtlinear, vorzunehmen. Der Benutzer kann mit Hilfe geeigneter Programme jederzeit durch Änderung des Bezugssignals in den Digitalisierungsvorgang eingreifen. Die Bildauflösung wird durch die Taktfrequenz bestimmt, die den jeweiligen Anforderungen an Bildqualität, Übertragungsgeschwindigkeit und Kosten entsprechend gewählt werden kann.

Da in der Speicherzugriffslogik zwei mit dem Ausgang des Vergleichers verbundene Halteglieder enthalten sind, von denen das eine bei steigender Taktimpulsflanke, das andere bei fallender Taktimpulsflanke das digitale Bildsignal übernimmt, wird das analoge Bildsignal mit doppelter Taktfrequenz digitalisiert und an den Digitalspeicher übertragen. Dadurch wird die Aufnahmezeit eines Bildes auf die Hälfte reduziert.

Darüber hinaus ist in der Speicherzugriffslogik ein Übertragerglied enthalten, das mit der Aktivierungslogik verbunden ist und nach dem Aufheben einer Sperre durch die Aktivierungslogik die digitalen Bildsignale an den Digitalspeicher überträgt. Dadurch wird nicht nur ermöglicht, einzelne Bildteile mit unterschiedlichen Referenzpegeln zu digitalisieren, sondern es können auch gleichsam Ausschnittvergrößerungen gewisser Bildteile erzeugt werden, wenn die Aktivierungslogik das Übertragerglied mit geän-

dertem Übertragungsbeginn und höherer Taktfrequenz ansteuert.

In der Aktivierungslogik ist ein Taktzähler enthalten, der durch einen Zeilensynchronimpuls der Videokamera rücksetzbar ist und nach einer eingestellten Anzahl von Taktimpulsen das Sperren der Übertragung der digitalen Bildsignale auslöst. Dadurch wird nicht nur für eine zeilensynchrone Übernahme der Bildvorlage in den Digitalspeicher gesorgt, sondern es kann durch eine Änderung der Anzahl der Taktimpulse auf einfache Weise eine Veränderung der Größe des digitalisierten Bildes erfolgen.

Um die Bildvorlage mit geringstmöglichem Schaltungsaufwand in einen Digitalspeicher des Mikrocomputers übertragen zu können, ist die Aktivierungslogik an die Taktversorgung des Mikrocomputers angeschlossen. Dadurch können andernfalls nötige Taktumsetzer und Zwischenspeicher zur Anpassung an unterschiedliche Übertragungsgeschwindigkeiten entfallen.

Die Videokamera ist zur Übertragung von Synchronimpulsen mit dem Mikrocomputer verbunden und der Aktivierungslogik sind Steuerbefehle aufgrund der Synchronimpulse vom Mikrocomputer zugeleitet. Da der Mikrocomputer nunmehr die Bildübertragung überwacht, kann die Aktivierungslogik einfacher gestaltet werden, da der Mikrocomputer die entsprechenden Steuerbefehle erzeugt und ihr zuleitet.

Ist die Videokamera zur Farbübertragung geeignet, sind ihre die Farbsignale führenden Ausgänge mit einer Signalselektierungseinrichtung verbunden, die vom Mikrocomputer ansteuerbar ist und über deren Ausgang der jeweils vom Mikrocomputer angewählte Signalausgang der Videokamera mit einem Eingang des Vergleichers verbunden ist. Diese Anordnung ermöglicht die Beibehaltung des einfachen Schaltungsaufbaues zur Digitalisierung und Übertragung der Bildvorlage, obwohl nun auch noch die Farbinformation umzuwandeln ist. Bei jedem Bilddurchlauf kann abwechselnd ein Farbauszug einer der drei Grundfarben erstellt werden, aber auch nur ein Farbauszug mit mehreren unterschiedlichen Bezugssignalen in aufeinanderfolgenden Bilddurchläufen, was zusätzliche Gestaltungsmöglichkeit bei der Digitalisierung der Bildvorlage eröffnet.

Darüber hinaus ist es bei einer Farbvideokamera auch möglich, jeden ein Farbsignal führenden Ausgang mit einem eigenen Vergleicher zu verbinden. Das ist insbesondere bei der Aufnahme von bewegten Objekten von Bedeutung, da hier die gleichzeitige Digitalisierung der Farbauszüge die Qualität der gespeicherten Bildvorlage beträchtlich erhöht. Dies läßt sich bei etwas höherem Schaltungsaufwand auch dadurch erreichen, daß die ein Farbsignal führenden Ausgänge der Videokamera über eine Multiplexeinrichtung mit dem Vergleicher verbunden sind und in der Speicherzugriffslogik ein Halteglied für das digitale Bildsignal jedes Farbsignals enthalten ist.

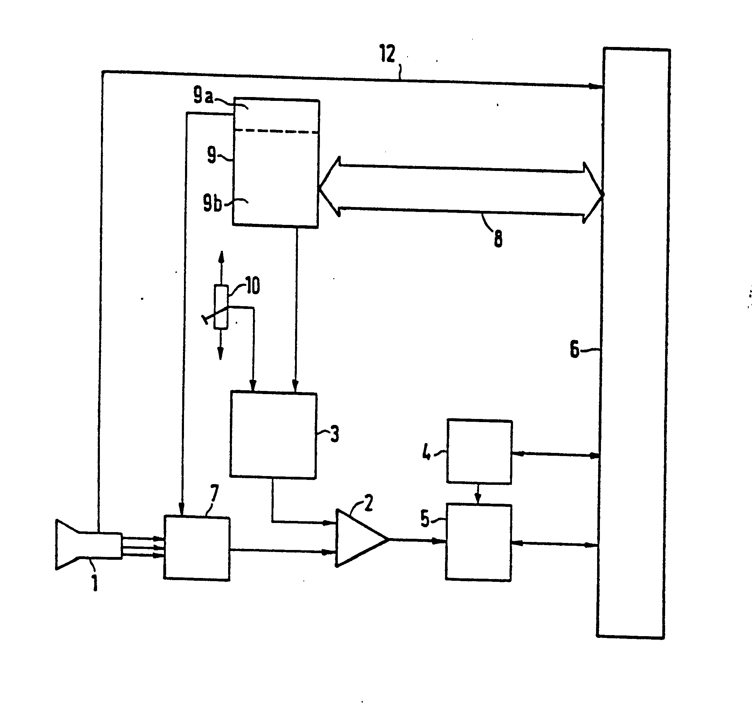

Zur Erläuterung der Erfindung anhand eines Ausführungsbeispieles wird nachfolgend auf eine Zeichnung Bezug genommen. Die Figur zeigt das schematische Blockschaltbild des Ausführungsbeispieles.

Eine Bildvorlage wird von einer Videokamera 1 aufgenommen, deren analoges Bildsignal einem Vergleicher 2 zugeführt wird. Dabei handelt es sich um einen Intensitätsauszug der Grauwerte, bzw. um Farbsignale der drei Grundfarben rot, blau und grün. Wie der Figur zu entnehmen ist, sind in diesem Fall die drei Farbausgänge der Videokamera 1 mit einer Signalselektierungseinrichtung 7 verbunden. Sie besteht aus einem Analog-Multiplexer, der jeweils einen Farbausgang der Videokamera 1 mit dem Ausgang der Signalselektierungseinrichtung 7 verbindet. Die Signalselektierungseinrichtung 7 ist gemeinsam mit einem Referenzpegelgenerator 3 über eine Einstelleinrichtung 9 und einen Bus 8 mit einem Mikrocomputer 6 verbunden. Ein Datenbyte wird vom Mikrocomputer 6 über den Bus 8 zur Einstelleinrichtung 9 geleitet, wo eine der Kanalauswahl dienende Einrichtung 9 a zwei Bits an den Analog-Multiplexer anlegt, der den so ausgewählten Farbausgang der Videokamera 1 mit einem Eingang des Vergleichers 2 verbindet. Die vom Datenbyte verbleibenden 6 Bits werden von einer der Einstellung eines Bezugssignals dienenden Einrichtung 9b dem Referenzpegelgenerator 3 zugeleitet. Dieser beinhaltet einen Digital/Analog-Wandler, von dessen Ausgang das Bezugssignal, gegebenenfalls strom/spannungsumgesetzt, einem zweiten Eingang des Vergleichers 2 zugeleitet wird. Eine Grundpegeleinstelleinrichtung 10 dient der Anpassung des Bezugssignals an die Maximalamplitude des analogen Bildsignals der Videokamera 1.

Am Ausgang des Vergleichers 2 liegt in Abhängigkeit vom Vergleichsergebnis ein digitales Bildsignal von der Bedeutung "logisch 0" oder "logisch 1" an. Unterhalb des Bezugssignals wird das analoge Bildsignal als schwarz (keine Farbe) detektiert. Es wird zwei Haltegliedern einer Speicherzugriffslogik 5 zugeleitet und von einem Halteglied bei steigender Taktimpulsflanke, vom anderen bei fallender Taktimpulsflanke übernommen. Die Taktversorgung erfolgt über eine Verbindung mit dem Mikrocomputer 6 mit dessen Taktfrequenz. Ein Übertragerglied der Speicherzugriffslogik 5 leitet das digitale Bildsignal an einen Digitalspeicher des Mikrocomputers 6 weiter. Das Übertragerglied ist mit einer Aktivierungslogik 4 verbunden, die durch zeitgerechtes Sperren und Öffnen des Übertragergliedes für ein zeilen- und bildsynchrones Einschreiben der digitalisierten Bildvorlage in den übernahmebereiten Digitalspeicher sorgt. Ein zeilenfrequenter Impuls, der über eine Synchronleitung 12 von der Videokamera 1 zum Mikrocomputer 6 gelangt, bewirkt das Rücksetzen eines Zählers der Aktivierungslogik 4 durch den Mikrocomputer 6 und den Beginn der Übertragung der digitalen Bildsignale durch das Übertragerglied der Speicherzugriffslogik 5. Nach beispielsweise 160 Systemtakten und damit 320 übertragenen Bildpunkten wird das Übertragerglied durch die Aktivierungslogik 4 gesperrt. Damit ist die Digitalisierung einer Bildzeile beendet und dieser Vorgang beginnt erneut mit dem nächsten zeilenfrequenten Impuls. Das Ende eines Bildes bzw. Halbbildes wird durch den Vertikalsynchronimpuls der Videokamera 1 über die Synchronleitung 12 angezeigt und die Speicherung der Bildvorlage wird beendet. Auf diese Art und Weise wird für die zeitrichtige Aufnahme des Bildes bzw. Halbbildes gesorgt, wobei die Steuerung durch die Aktivierungslogik 4 selbsttätig erfolgt, der dazu lediglich die Synchronimpulse der Videokamera 1 zugeleitet werden müssen, was aber auch ohne Zwischenschaltung des Mikrocomputers 6 erfolgen kann.

Nunmehr kann eine Kontrolle, Bearbeitung und gegebenenfalls Neuaufnahme der Bildvorlage erfolgen. Bei Farbübertragung wäre beispielsweise auf einen anderen Farbkanal umzuschalten und eventuell ein anderes Bezugssignal durch den Referenzpegelgenerator 3 zu erzeugen. Die Bildvorlage ist in der Art abgespeichert, daß jedem Bildpunkt ein Bit entspricht. Die einzelnen Farbauszüge können entweder jeweils separat, aber auch zusammengefaßt abgespeichert werden, wobei dann jedem Bildpunkt die entsprechenden drei Bits zugeordnet werden. Vor der endgültigen Archivierung kann die Bildinformation, beispielsweise durch Pausenkennung, weiter verdichtet werden.

Das analoge Bildsignal wird dem Vergleicher 2 in direkter galvanischer Kopplung zugeleitet. Dadurch ist sichergestellt, daß es unabhängig vom Bildinhalt verzerrungsfrei übermittelt wird. Eine kapazitive Auskopplung ist im Prinzip denkbar, jedoch muß die Entladezeitkonstante größer als die Dauer eines Bildes bzw. Halbbildes sein, um absolute Verzerrungsfreiheit während der Aufnahme zu gewährleisten. Zur Erzielung reproduzierbarer Ergebnisse ist insbesondere die Grundpegeleinstellung 10 derart auszulegen, daß sie stabil und möglichst temperaturunabhängig arbeitet. Als Signalselektierungseinrichtung 7 wird ein Vierkanal-Analogmultiplexer und als Einstelleinrichtung 9 ein Zwischenspeicher ("latch") verwendet. Die Halteglieder und das Übertragerglied der Speicherzugriffslogik 5 werden mit Flip-Flops aufgebaut. Derartige Bauteile finden auch bei der Taktversorgung der Aktivierungslogik 4 Verwendung. Zur Realisierung des Ausführungsbeispieles können beispielsweise integrierte Bauteile der Serie SN 74 LS der Firma Texas Instruments verwendet werden.

Diese erfindungsgemäße Anordnung zur Speicherung einer Bildvorlage in einem Digitalspeicher soll bei geringem technischen Aufwand, einfacher Bedienung und niederen Kosten zur Deckung des stark steigenden Bedarfes an Hilfen zur Erstellung von Grafiken zur Verwendung in der Kommunikationstechnik, beispielsweise Bildschirmtext, beitragen. Der Einsatz von Bildern als Informationsträger war bisher in erster Linie dadurch eingeschränkt, daß sie mit Hilfe aufwendiger Programme erstellt werden mußten. Die Erfindung zeigt nun eine Möglichkeit, nicht nur Grafiken mit geringem Speicherplatzbedarf rasch und einfach in einem Computer abzuspeichern, sondern ermöglicht auch die Digitalisierung von Halbtonvorlagen und im eingeschränkten Umfang sogar von bewegten Bildern.

10 Patentansprüche
1 Figur

Patentansprüche

1. Anordnung zur Umsetzung eines, durch fotoelektrische Aufnahme erhaltenen, analogen Bildsignals in ein digitales Bildsignal mittels eines Vergleichers (2), von dessen Ausgang das digitale Bildsignal als Vergleichsergebnis in Form eines Bits abnehmbar ist, wobei den Eingängen des Vergleichers (2) neben dem analogen Bildsignal ein von einem Referenzpegelgenerator (3) erzeugtes Bezugssignal zugeführt ist und der Referenzpegelgenerator (3) einen Digital/Analog-Wandler beinhaltet, dessen Eingang zur Bezugssignaleinstellung mit einem Mikrocomputer (6) verbunden ist,
dadurch   gekennzeichnet , daß mindestens ein Signalausgang einer zur Aufnahme eingesetzten Videokamera (1) mit dem entsprechenden Eingang des Vergleichers (2) und eine Speicherzugriffslogik (5) sowohl mit dem Ausgang des Vergleichers (2) als auch mit dem Mikrocomputer (6) verbunden ist, daß eine Aktivierungslogik (4) vorgesehen ist, die zur getakteten, von Synchronimpulsen der Videokamera (1) gesteuerten Übertragung des digitalen Bildsignals in einen Digitalspeicher sowohl mit dem Mikrocomputer (6) als auch mit der Speicherzugriffslogik (5) verbunden ist und daß die Speicherzugriffslogik (5) von der Aktivierungslogik (4) ansteuerbar ist.

2. Anordnung nach Anspruch 1,
dadurch   gekennzeichnet , daß in der Speicherzugriffslogik (5) zwei mit dem Ausgang des Vergleichers (2) verbundene Halteglieder enthalten sind, von denen das eine bei steigender Taktimpulsflanke, das andere bei fallender Taktimpulsflanke das digitale Bildsignal übernimmt.

0181320

3. Anordnung nach Anspruch 1 oder 2,
d a d u r c h   g e k e n n z e i c h n e t , daß in der
Speicherzugriffslogik (5) ein Übertragerglied enthalten
ist, das mit der Aktivierungslogik (4) verbunden ist und
nach dem Aufheben einer Sperre durch die Aktivierungslogik (4) die digitalen Bildsignale an den Digitalspeicher
überträgt.

4. Anordnung nach einem der vorherigen Ansprüche,
d a d u r c h   g e k e n n z e i c h n e t , daß in der
Aktivierungslogik (4) ein Taktzähler enthalten ist, der
durch einen Zeilensynchronimpuls der Videokamera (1)
rücksetzbar ist und nach einer eingestellten Anzahl von
Taktimpulsen das Sperren der Übertragung der digitalen
Bildsignale auslöst.

5. Anordnung nach einem der vorhergehenden Ansprüche,
d a d u r c h   g e k e n n z e i c h n e t , daß die
Aktivierungslogik (4) an die Taktversorgung des Mikrovomputers (6) angeschlossen ist.

6. Anordnung nach einem der vorherigen Ansprüche,
d a d u r c h   g e k e n n z e i c h n e t , daß die
Videokamera (1) zur Übertragung von Synchronimpulsen mit
dem Mikrocomputer (6) verbunden ist.

7. Anordnung nach Anspruch 6,
d a d u r c h   g e k e n n z e i c h n e t , daß der
Aktivierungslogik (4) Steuerebefehle aufgrund der Synchronimpulse der Videokamera (1) vom Mikrocomputer (6)
zugeleitet sind.

8. Anordnung nach einem der vorherigen Ansprüche,
d a d u r c h   g e k e n n z e i c h n e t , daß die
Videokamera (1) zur Farbübertragung geeignet ist und ihre
die Farbsignale führenden Ausgänge mit einer Signalselek-

- 11 -        VPA 84 P 7019 E

tierungseinrichtung (7) verbunden sind, die vom Mikrocomputer (6) ansteuerbar ist und über deren Ausgang der
jeweils vom Mikrocomputer (6) ausgewählte Signalausgang
der Videokamera (1) mit einem Eingang des Vergleichers
(2) verbunden ist.

9. Anordnung nach einem der Ansprüche 1 bis 7,
d a d u r c h   g e k e n n z e i c h n e t , daß die
Videokamera (1) zur Farbübertragung geeignet ist und jeder ein Farbsignal führender Ausgang mit einem eigenen
Vergleicher (2) verbunden ist.

10. Anordnung nach einem der Ansprüche 1 bis 7,
d a d u r c h   g e k e n n z e i c h n e t , daß die
Videokamera (1) zur Farbübertragung geeignet ist, ihre
ein Farbsignal führenden Ausgänge über eine Multiplexeinrichtung mit dem Vergleicher (2) verbunden sind und in
der Speicherzugriffslogik (5) mindestens ein Halteglied
für das digitale Bildsignal jedes Farbsignals enthalten
ist.

0181320

84 P 7019